# EUROPÄISCHE PATENTSCHRIFT

(11) **EP 2 864 728 B1**
(45) Veröffentlichungstag und Bekanntmachung des Hinweises auf die Patenterteilung: **21.06.2017**
(21) Anmeldenummer: 12729640.8
(22) Anmeldetag: 26.06.2012
(51) Int. Cl.: F28D 9/00, F28F 13/08, F28F 3/12

(54) **VERDAMPFER**
EVAPORATOR
ÉVAPORATEUR

(43) Veröffentlichungstag der Anmeldung: 29.04.2015
(73) Patentinhaber: Eberspächer Exhaust Technology GmbH & Co. KG, 66539 Neunkirchen (DE)
(72) Erfinder: GAISER, Gerd, 72768 Reutlingen (DE)
(74) Vertreter: BRP Renaud & Partner mbB Rechtsanwälte Patentanwälte Steuerberater
(86) Internationale Anmeldenummer: PCT/EP2012/062389
(87) Internationale Veröffentlichungsnummer: WO 2014/000775

(56) Entgegenhaltungen:
- DE-A1-102008 058 210
- DE-A1-102009 012 493
- DE-A1-102009 045 671
- DE-A1-102011 077 154
- US-A- 5 359 989
- US-A1- 2004 159 424

## Beschreibung

Die vorliegende Erfindung betrifft einen Verdampfer zum Verdampfen einer Flüssigkeit sowie eine Abwärmenutzungsvorrichtung für eine Brennkraftmaschine. Bei Abwärmenutzungsvorrichtungen, die auf dem Prinzip eines Rankine-Kreisprozesses oder eines Rankine-Clausius-Kreisprozesses beruhen, kommen Verdampfer zum Einsatz, mit deren Hilfe das Arbeitsmedium des Kreisprozesses verdampft werden kann, wobei die hierfür benötigte Wärme dem Abgas einer Brennkraftmaschine entnommen wird. Dementsprechend enthält ein derartiger Verdampfer einerseits einen Gaspfad für das Abgas und andererseits einen Verdampfungspfad für das zu verdampfende Arbeitsmedium.

Ein derartiger Verdampfer kann beispielsweise als Plattenwärmetauscher ausgestaltet sein und dementsprechend mehrere Kanalplattenanordnungen aufweisen, die in einer Stapelrichtung gestapelt sind, wobei jeweils zwischen zwei benachbarten Kanalplattenanordnungen ein Gaspfad ausgebildet ist, durch den ein Gas führbar ist, über das die zum Verdampfen der Flüssigkeit benötigte Wärme zuführbar ist. Die jeweilige Kanalplattenanordnung kann dabei zweckmäßig einen Flüssigkeitseinlass, einen Dampfauslass und einen den Flüssigkeitseinlass mit dem Dampfauslass verbindenden Kanal enthalten, der beispielsweise einen mehrfach umgelenkten Verdampfungspfad für die zu verdampfende Flüssigkeit bildet. Ein solcher Plattenwärmetauscher ist aus der DE 10 2009 045 671 A1 bekannt. Die vorliegende Erfindung beschäftigt sich mit dem Problem, für einen Verdampfer der eingangs genannten Art eine verbesserte oder zumindest eine andere Ausführungsform anzugeben, die sich durch eine hohe Effizienz und eine preiswerte Herstellbarkeit auszeichnet.

Dieses Problem wird durch die vorliegende Erfindung insbesondere durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den jeweiligen Kanal, in dem die Verdampfung der Flüssigkeit stattfindet, zumindest in einer Verdampfungszone des Verdampfungspfads so zu konzipieren, dass der durchströmbare Querschnitt in der Strömungsrichtung der verdampfenden Flüssigkeit zunimmt. Der in der Strömungsrichtung zunehmende durchströmbare Querschnitt des Verdampfungspfads berücksichtigt in einem gewissen Umfang die Volumenzunahme der zu verdampfenden Flüssigkeit durch die Verdampfung. Hierdurch kann beispielsweise ein übermäßiger Druckanstieg im Verdampfungspfad vermieden werden. Ferner kann auch die Strömungsgeschwindigkeit in der Gasphase reduziert werden, was die Verweildauer der zu verdampfenden Flüssigkeit im Verdampfer erhöht. Insgesamt lässt sich die Effizienz des Verdampfers dadurch steigern.

In Verbindung mit der Plattenbauweise des Verdampfers kann der Verdampfer vergleichsweise preiswert realisiert werden. Die einzelnen Kanalplattenanordnungen lassen sich baugleich realisieren, was die Herstellungskosten reduziert.

Die Zunahme des durchströmbaren Querschnitts des Verdampfungspfads zumindest innerhalb der Verdampfungszone in der Strömungsrichtung der zu verdampfenden Flüssigkeit kann dabei ungestuft oder stetig, zum Beispiel linear oder progressiv, erfolgen. Ebenso ist es möglich, die Querschnittszunahme gestuft zu realisieren.

Die Verdampfungszone des Verdampfungspfads erstreckt sich im Wesentlichen von einem Bereich des Verdampfungspfads, in dem die Verdampfung beginnt, bis zu einem Bereich des Verdampfungspfads, in dem die Flüssigkeit im Wesentlichen vollständig verdampft ist.

Entsprechend einer vorteilhaften Ausführungsform kann der jeweilige Kanal in einer Vorwärmzone einen in der Strömungsrichtung der Flüssigkeit konstant bleibenden durchströmbaren Querschnitt aufweisen. Hierbei wird berücksichtigt, dass sich in der Vorwärmzone keine signifikante Volumenänderung einstellt. Die Vorwärmzone erstreckt sich im Wesentlichen vom Flüssigkeitseinlass bis zu einem Bereich des Verdampfungspfads, in dem die Verdampfung beginnt.

Zusätzlich oder alternativ kann vorgesehen sein, dass der jeweilige Kanal in einer Überhitzungszone einen in der Strömungsrichtung der Flüssigkeit konstant bleibenden durchströmbaren Querschnitt aufweist. Hier liegt die Überlegung zugrunde, dass in der Überhitzungszone in erster Linie eine Druckerhöhung im Dampf erzielt werden soll. Die Überhitzungszone erstreckt sich dabei im Wesentlichen von einem Bereich des Verdampfungspfads, in dem die Flüssigkeit im Wesentlichen vollständig verdampft ist, bis zum Dampfauslass.

Liegen sowohl in der Vorwärmzone als auch in der Überhitzungszone konstant bleibende durchströmbare Querschnitte vor, bedeutet dies, dass der Verdampfungspfad nur, also ausschließlich in der Verdampfungszone einen in der Strömungsrichtung zunehmenden durchströmbaren Querschnitt besitzt. Ferner bedeutet dies, dass der durchströmbare Querschnitt in der Überhitzungszone größer ist als in der Vorwärmzone.

Bei einer anderen Ausführungsform kann der jeweilige Kanal durch mehrere nebeneinander angeordnete Kanalabschnitte gebildet sein, wobei der Verdampfungspfad am Übergang zwischen zwei benachbarten Kanalabschnitten jeweils eine 180° Umlenkung aufweist. Hierdurch erhält der Kanal bzw. der Verdampfungspfad einen mäanderförmigen Verlauf, der auf einem vergleichsweisen engen Raum eine relativ große Pfadlänge bzw. Kanallänge realisiert. Die jeweilige Kanalplattenanordnung weist zwei Platten auf, wobei der jeweilige Kanal durch Einprägungen gebildet ist, die entweder nur in einer der beiden Platten ausgebildet sind oder in beiden Platten spiegelsymmetrisch ausgebildet sind. Die Einprägungen können dabei insbesondere gemäß den Kanalabschnitten konfiguriert sein, um den mäanderförmigen Verlauf für den Kanal bzw. den Verdampfungspfad zu realisieren. Die Einprägungen können beispielsweise durch Tiefziehen oder durch Hochdruckumformung realisiert werden. Sofern die Einprägungen nur in einer der beiden Platten ausgebildet sind, kann die andere Platte eben ausgestaltet sein.

Gemäß einer vorteilhaften Weiterbildung kann die jeweilige mit Prägungen versehene Platte an einer dem Gaspfad zugewandten Außenseite im Bereich der Einprägungen konvex gewölbte oder ebene Kontaktflächen aufweisen. Die gewölbten Kontaktflächen lassen sich besonders einfach herstellen. Die ebenen Kontaktflächen begünstigen die Durchströmung im Gaspfad und können die Anbindung von die Wärmeübertragung verbessernden Elementen vereinfachen. Entsprechend einer zweckmäßigen Weiterbildung kann im jeweiligen Gaspfad eine Finnenstruktur angeordnet sein, die an den Kontaktflächen angeordnet ist, insbesondere daran befestigt ist. Eine derartige Finnenstruktur kann die Wärmeübertragung zwischen dem Gas des Gaspfads und der jeweiligen Platte verbessern, was die wärmeübertragende Kopplung zwischen Gaspfad und Verdampfungspfad verbessert. Die Finnenstruktur kann beispielsweise im Bereich der Kontaktflächen mit der jeweiligen Platte verlötet oder verschweißt sein.

Besonders zweckmäßig können die beiden Platten der jeweiligen Kanalplattenanordnung aneinander befestigt sein. Hierdurch kann der durch die aufeinander gestapelten Kanalplattenanordnungen gebildete Plattenstapel stabilisiert und insbesondere selbsttragend konfiguriert werden. Zweckmäßig können die beiden Platten der jeweiligen Kanalplattenanordnung den jeweiligen Kanal seitlich einfassend entlang des Verdampfungspfads aneinander befestigt sein. Hierdurch lassen sich die Kanäle besonders einfach realisieren. Gleichzeitig kann dadurch auch eine effiziente Abdichtung des jeweiligen Kanals realisiert werden. Die Befestigung kann hierbei beispielsweise mittels eines Lötverfahrens oder eines Schweißverfahrens realisiert werden. Geeignete Schweißverfahren sind beispielsweise Laserschweißen, Mikroplasmaschweißen, Mikro-WIG-Schweißen, Rollnahtschweißen und Widerstandsschweißen. Zwei seitliche Begrenzungswände sind vorgesehen, welche die Gaspfade an einander gegenüberliegenden Seiten jeweils von einem Gaseinlass bis zu einem Gasauslass begrenzen. Die Begrenzungswände können dabei insbesondere die benachbarten Kanalplattenanordnungen miteinander verbinden bzw. aneinander befestigen. Somit steigern die Begrenzungswände die Stabilität des Plattenstapels. Die eine Begrenzungswand weist Einlassöffnungen auf, die jeweils mit einem Flüssigkeitseinlass einer der Kanalplattenanordnungen fluidisch verbunden ist. Hierdurch wird die Zuführung der zu verdampfenden Flüssigkeit durch die Begrenzungswand hindurch vereinfacht. Die andere Begrenzungswand weist Auslassöffnungen auf, die jeweils mit einem Dampfauslass einer der Kanalplattenanordnungen fluidisch verbunden ist. Somit kann eine gemeinsame Abführung der verdampften Flüssigkeit durch die andere Begrenzungswand vereinfacht werden. Die Begrenzungswände sind jeweils durch mehrere Wandelemente gebildet, die jeweils nur einen der Gaspfade seitlich begrenzen. Hierdurch vereinfacht sich der modulare Aufbau des Verdampfers, wobei insbesondere die Anzahl der Wandelemente der jeweiligen Begrenzungswand der Anzahl der Kanalplattenanordnungen weitgehend entspricht. Die Wandelemente sind entweder jeweils an beide diesen Gaspfad begrenzende Kanalplattenanordnungen angebaut oder an einer der Platten einer der diesem Gaspfad begrenzenden Kanalplattenanordnungen integral ausgeformt und dann an die dazu benachbarte Kanalplattenanordnung angebaut. Insbesondere die integrierte Bauform, bei welcher das jeweilige Wandelement an zumindest einer Platte integral ausgeformt ist, vereinfacht eine preisgünstige Herstellung des Verdampfers. Das Anbauen der Wandelemente erfolgt zweckmäßig wieder über Schweißverbindungen oder Lötverbindungen. Mittels Schweißverbindungen lassen sich beispielsweise Mehr-Blech-Nähte realisieren, wodurch gleichzeitig mehrere Komponenten aneinander festgelegt werden können. Sofern die aneinander zu fixierenden Komponenten flächig aneinander anliegen, sind Lötverbindungen bevorzugt.

Bei einer anderen vorteilhaften Weiterbildung kann an die eine Begrenzungswand eine Einlassabdeckung angebaut sein, die mehrere oder alle Einlassöffnungen abdeckt und einen Zuführkanal bildet, der einen gemeinsamen Flüssiganschluss mit den Flüssigkeitseinlässen fluidisch verbindet. Zusätzlich oder alternativ kann an die andere Begrenzungswand eine Auslassabdeckung angebaut sein, die mehrere oder alle Auslassöffnungen abdeckt und einen Abführkanal bildet, der einen gemeinsamen Dampfanschluss mit den Dampfauslässen fluidisch verbindet. Durch diese Maßnahmen vereinfacht sich die Montage des Verdampfers bzw. der Einbau des Verdampfers in die Abwärmenutzungsvorrichtung. Zweckmäßig können die gestapelten Kanalplattenanordnungen einen Stapel bilden, der bezüglich der Stapelrichtung zwei voneinander entfernte Endplatten aufweist, die jeweils zusammen mit einer dazu benachbarten Kanalplattenanordnung einen Gaspfad ausbilden bzw. begrenzen. Die Endplatten enthalten somit keinen Verdampfungspfad, sondern dienen nur zur Begrenzung des Gaspfads. Diese Bauweise führt dazu, dass sämtliche Verdampfungspfade in der Stapelrichtung zwischen zwei Gaspfaden angeordnet sind, was die Effektivität des Verdampfers erhöht.

Entsprechend einer vorteilhaften Auführungsform kann vorgesehen sein, dass die jeweilige Kanalplattenanordnung aus Eisen oder aus einer Eisenlegierung, insbesondere aus Stahl, vorzugsweise aus Edelstahl, hergestellt ist. Hierdurch besitzt die jeweilige Kanalplattenanordnung eine besonders hohe Temperaturbeständigkeit, wodurch es insbesondere möglich ist, den Verdampfer relativ nahe am Motorblock der Brennkraftmaschine in der Abtasanlage, z.B. am bzw. im Abgaskrümmer, anzuordnen. Alternativ ist es grundsätzlich auch möglich, die Kanalplattenanordnungen aus einem Leichtmetall, z.B. aus Aluminium, oder aus einer Leichtmetalllegierung, vorzugsweise aus einer Aluminiumlegierung, herzustellen, wodurch der Verdampfer eine besonders hohe energetische Effizienz besitzt.

Eine erfindungsgemäße Abwärmenutzungsvorrichtung für eine Brennkraftmaschine, insbesondere in einem Kraftfahrzeug, umfasst einen Abwärmenutzungskreis, in dem ein Arbeitsmedium zirkuliert und in dem in der Strömungsrichtung des Arbeitsmediums nacheinander eine Expansionsmaschine zum Entspannen des Arbeitsmediums, ein Kondensator zum Kondensieren des Arbeitsmediums, eine Fördereinrichtung zum Antreiben des Arbeitsmediums im Abwärmenutzungskreis und ein Verdampfer der vorstehend beschriebenen Art zum Verdampfen des Arbeitsmediums angeordnet sind.

Eine erfindungsgemäße Brennkraftmaschine, insbesondere für ein Kraftfahrzeug, umfasst eine Abwärmenutzungsvorrichtung der vorstehenden Art sowie eine Abgasanlage, die wärmeübertragend mit dem Verdampfer der Abwärmenutzungsvorrichtung gekoppelt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht eines Verdampfers,
- Fig. 2: einen Längsschnitt durch eine Kanalplattenanordnung des Verdampfers entsprechend Schnittlinien II in Figur 1,
- Fig. 3 und 4: jeweils einen anderen Längsschnitt der Kanalplattenanordnung gemäß Schnittlinien III in Figur 2, bei verschiedenen Ausführungsformen,
- Fig. 5: einen Längsschnitt des Verdampfers im Bereich mehrerer Kanalplattenanordnungen,
- Fig. 6: eine teilweise geschnittene isometrische Ansicht einer Kanalplattenanordnung,
- Fig. 7: eine isometrische Ansicht auf einen Bereich des Verdampfers,
- Fig. 8-11: jeweils eine Schnittansicht durch einen Bereich des Verdampfers gemäß Schnittlinien VIII in Figur 7, bei verschiedenen Ausführungsformen,
- Fig. 12: eine isometrische Teilansicht einer Kanalplattenanordnung mit Finnenstruktur,
- Fig. 13 und 14: isometrische Teilansichten des Verdampfers, bei verschiedenen Ausführungsformen,
- Fig. 15: eine stark vereinfachte, schaltplanartige Prinzipdarstellung einer Abwärmenutzungsvorrichtung mit einem derartigen Verdampfer.

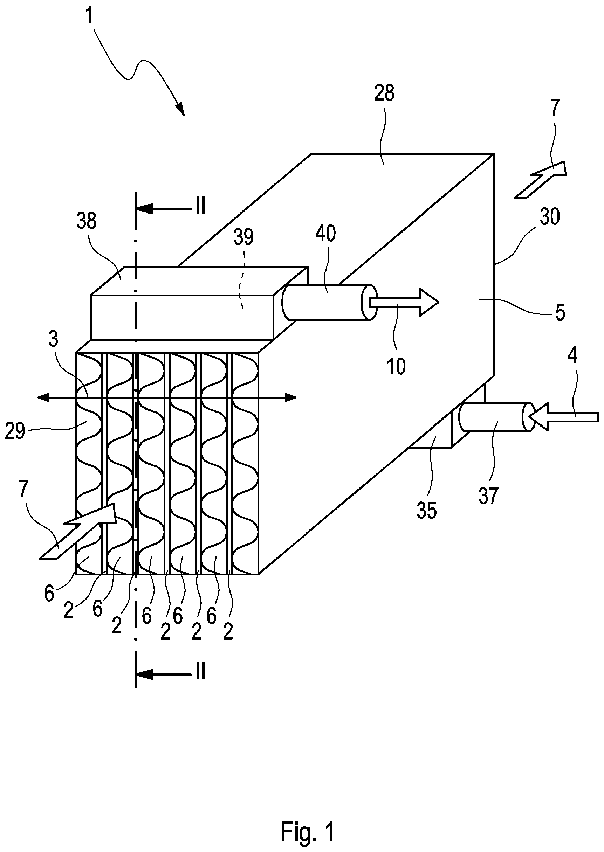

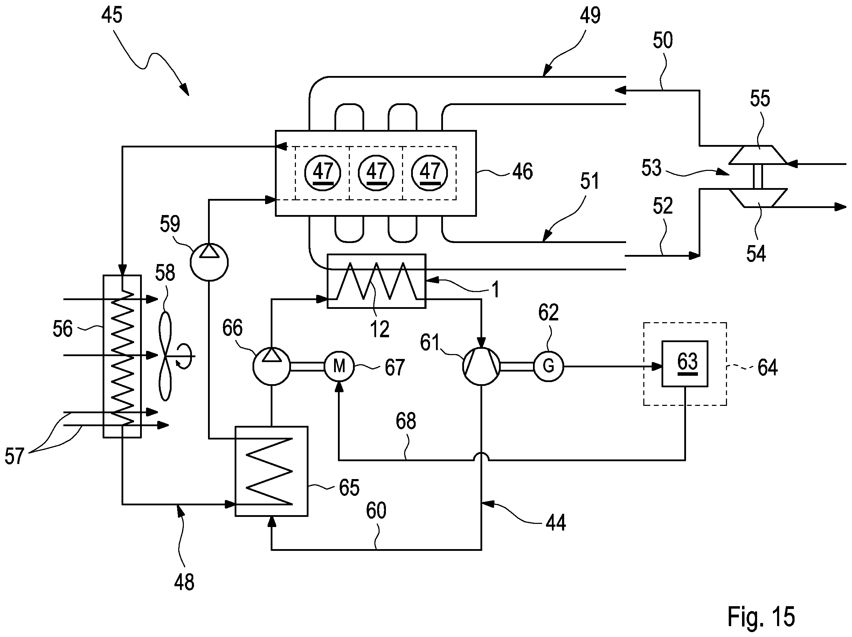

Entsprechend Figur 1 umfasst ein Verdampfer 1 mehrere Kanalplattenanordnungen 2, die in einer Stapelrichtung 3 gestapelt sind. Der Verdampfer 1 dient zum Verdampfen einer Flüssigkeit 4, die dem Verdampfer 1 gemäß einem Pfeil zugeführt werden kann. Bevorzugt kommt der Verdampfer 1 in einer Abwärmenutzungsvorrichtung einer Brennkraftmaschine zur Anwendung, um Abgasen der Brennkraftmaschine Wärme zu entziehen, um damit eine Flüssigkeit, nämlich ein Arbeitsmedium der Abwärmenutzungsvorrichtung zu verdampfen. Eine derartige Abwärmenutzungsvorrichtung arbeitet nach dem Rankine-Kreisprozess bzw. nach dem Rankine-Clausius-Kreisprozess. Eine wesentliche Komponente einer derartigen Abwärmenutzungsvorrichtung ist dabei der Verdampfer 1, der eine wärmeübertragende Kopplung zwischen einer Abgasanlage der Brennkraftmaschine und einem Abwärmenutzungskreis der Abwärmenutzungsvorrichtung schafft. Ein Beispiel für eine derartige Abwärmenutzungsvorrichtung wird weiter unten mit Bezug auf Fig. 15 näher erläutert.

Die gestapelten Kanalplattenanordnungen 2 bilden einen Plattenstapel 5 oder Verdampferblock 5. Innerhalb des Stapels 2 bzw. innerhalb des Blocks 5 ist jeweils zwischen zwei benachbarten Kanalplattenanordnungen 2 ein Gaspfad 6 ausgebildet, durch den ein Gas 7 entsprechend Pfeilen hindurchführbar ist. Über dieses Gas 7 wird die zum Verdampfen der Flüssigkeit 4 benötigte Wärme zugeführt. Insbesondere handelt es sich beim Gas 7 um Abgas einer Brennkraftmaschine, deren Abwärme zum Beispiel in einer Abwärmenutzungsvorrichtung genutzt werden soll.

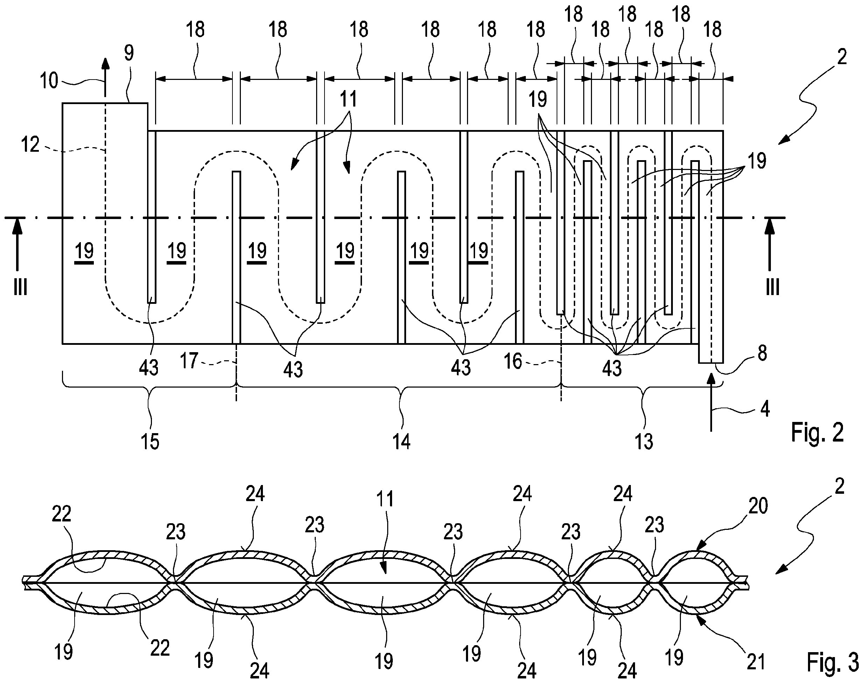

Gemäß Figur 2 weist jede Kanalplattenanordnung 2 einen Flüssigkeitseinlass 8 und einen Dampfauslass 9 auf, durch den Dampf 10 bzw. verdampfte Flüssigkeit austreten kann. Ferner enthält die jeweilige Kanalplattenanordnung 2 einen Kanal 11, der den Flüssigkeitseinlass 8 fluidisch mit dem Dampfauslass 9 verbindet. Der Kanal 11 bildet dabei einen mit unterbrochener Linie dargestellten, mehrfach umgelenkten Verdampfungspfad 12 für die zu verdampfende Flüssigkeit 4. Der Kanal 12 umfasst in der Strömungsrichtung der zu verdampfenden Flüssigkeit 4 zunächst eine Vorwärmzone 13, an die sich eine Verdampfungszone 14 anschließt, und an die sich eine Überhitzungszone 15 anschließt. Die Vorwärmzone 13 erstreckt sich dabei im Wesentlichen vom Flüssigkeitseinlass 8 bis zu einem Bereich 16 des Verdampfungspfads 12, in dem die Verdampfung der Flüssigkeit 4 beginnt. Innerhalb der Vorwärmzone 13 erwärmt sich somit die Flüssigkeit 4 auf ihre Siedetemperatur. Die Verdampfungszone 14 erstreckt sich im Wesentlichen von diesem Bereich 16, in dem die Verdampfung der Flüssigkeit 4 beginnt, bis zu einem Bereich 17 des Verdampfungspfads, in dem die Flüssigkeit 4 im Wesentlichen vollständig verdampft ist. Innerhalb der Verdampfungszone 14 bleibt die Flüssigkeit 4 im Wesentlichen auf ihrer Siedetemperatur und wird innerhalb der Verdampfungszone 14 vollständig verdampft. Die Überhitzungszone 15 erstreckt sich im Wesentlichen von dem Bereich 17, in dem die Flüssigkeit 4 im Wesentlichen vollständig verdampft ist, bis zum Dampfauslass 9. Innerhalb der Überhitzungszone 15 erhöht sich die Temperatur des Dampfs 9 über die Siedetemperatur der Flüssigkeit 4 hinaus.

Der hier vorgestellte Verdampfer 1 charakterisiert sich nun dadurch, dass innerhalb der jeweiligen Kanalplattenanordnung 2 der jeweilige Kanal 11 einen durchströmbaren Querschnitt 18 aufweist, der zumindest in der Verdampfungszone 14 in der Strömungsrichtung der verdampfenden Flüssigkeit 4 zunimmt. In der gezeigten Ausführungsform der Figur 2 nimmt der durchströmbare Querschnitt 18 dabei in mehreren Stufen sprungartig zu. Bei einer anderen Ausführungsform ist auch eine ungestufte oder kontinuierliche Zunahme des durchströmbaren Querschnitts 18 realisierbar.

Bei der in Figur 2 gezeigten Ausführungsform ist der durchströmbare Querschnitt 18 innerhalb der Vorwärmzone 13 konstant gehalten. Ferner ist bei der in Figur 2 gezeigten Ausführungsform der durchströmbare Querschnitt 18 innerhalb der Überhitzungszone 15 konstant gehalten. Somit erfolgt hier eine Zunahme des Querschnitts 18 nur innerhalb der Verdampfungszone 14. Der durchströmbare Querschnitt 18 ist folglich in der Vorwärmzone 13 kleiner als in der Überhitzungszone 15.

Zweckmäßig ist der jeweilige Kanal 11 mäanderförmig konfiguriert, um den mehrfach umgelenkten Verdampfungspfad 12 möglichst kompakt zu realisieren. Gemäß Figur 2 kann dazu der jeweilige Kanal 11 durch mehrere nebeneinander angeordnete, durch gemeinsame Kanalwände 43 voneinander getrennte Kanalabschnitte 19 gebildet sein, die so aneinander angeordnet sind 19, dass der Verdampfungspfad 12 am Übergang zwischen zwei benachbarten Kanalabschnitten 19 jeweils eine 180° Umlenkung erfährt. Beispielsweise durchströmt die Flüssigkeit 4 bzw. der Dampf 10 die einzelnen Kanalabschnitte 19 ausgehend vom Flüssigkeitseinlass 4 bis zum Dampfauslass 9 wechselweise von unten nach oben und von oben nach unten.

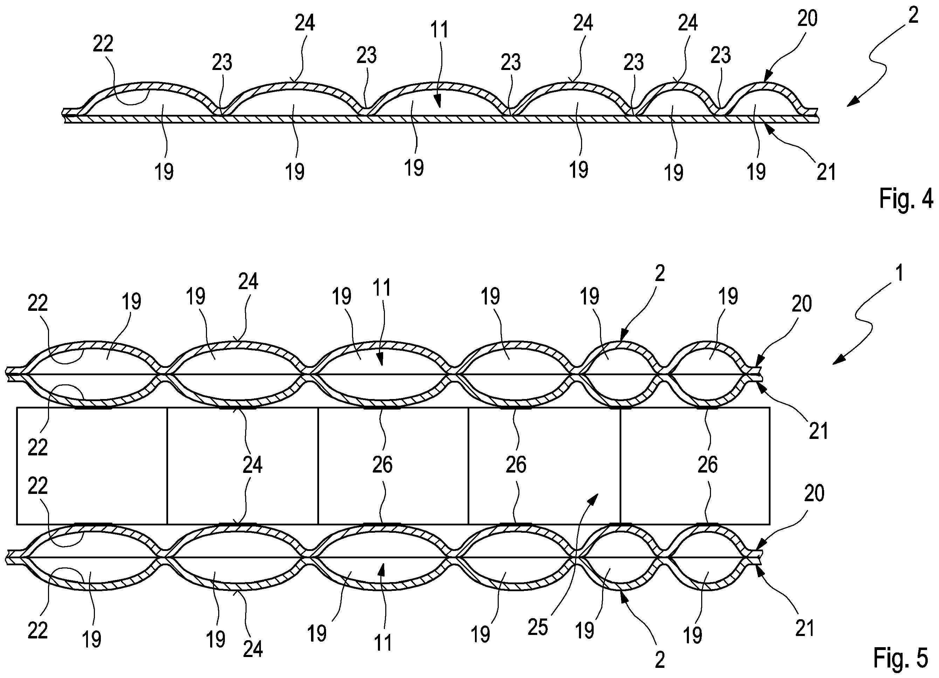

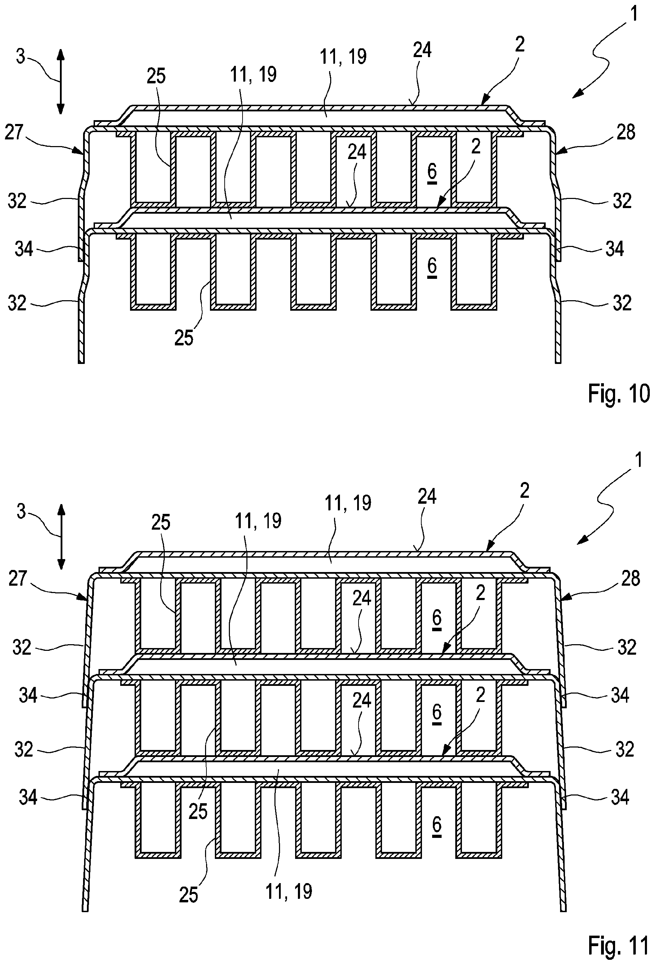

Entsprechend den Figuren 3-14 kann die jeweilige Kanalplattenanordnung 2 jeweils zwei Platten 20, 21 aufweisen, wobei der jeweilige Kanal 11 bzw. die Kanalabschnitte 19 durch Einprägungen 22 gebildet sind. Diese Einprägungen 22 können gemäß Figur 3 in beiden Platten 20, 21 spiegelsymmetrisch ausgebildet sein oder gemäß Figur 4 in nur einer der beiden Platten 20, 21 ausgebildet sein. Im Beispiel der Figur 4 ist die eine Platte 20 mit den Einprägungen 22 ausgestattet, während die andere Platte 21 eben konfiguriert ist.

Die beiden Platten 20, 21, die zwischen sich den Kanal 11 bzw. die Kanalabschnitte 19 ausbilden, sind zweckmäßig aneinander fixiert. Entsprechende Befestigungsstellen sind in den Figuren 3 und 4 mit 23 bezeichnet. Diese Befestigungsstellen 23 können Lötverbindungen oder Schweißverbindungen sein. Die Befestigungsstellen 23 sind zweckmäßig dicht ausgeführt und so realisiert, dass sie den jeweiligen Kanal 11 bzw. den jeweiligen Kanalabschnitt 19 seitlich einfassen und insbesondere die Kanalwände 43 bilden, so dass letztlich die beiden Platten 20, 21 entlang des Verdampfungspfads 12 aneinander befestigt sind.

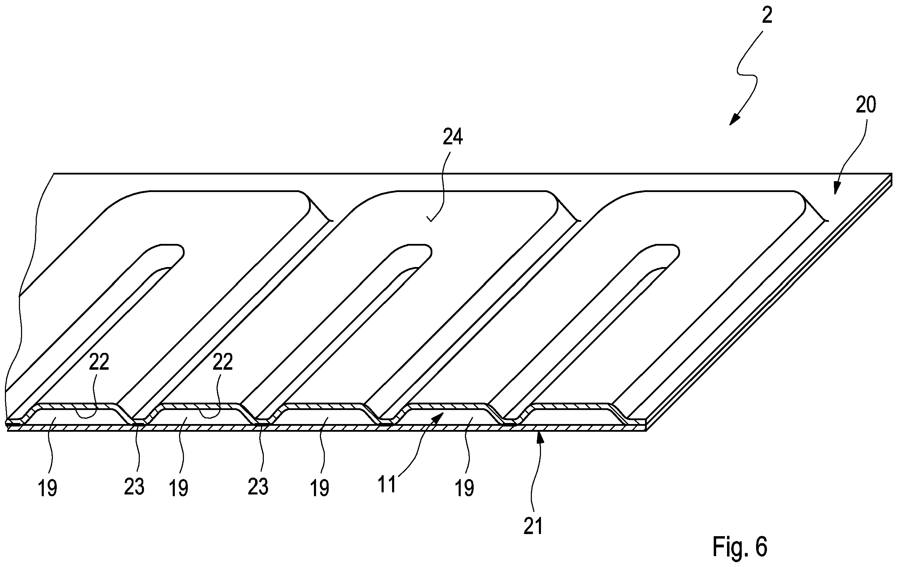

Die mit den Einprägungen 22 versehenen Platten 20, 21 können an ihrer Außenseite, die innerhalb des Blocks 5 dem Gaspfad 6 zugewandt ist, im Bereich der Einprägungen 22 entsprechend den Figuren 3-5 konvex gewölbt sein oder gemäß den Figuren 6-14 eben ausgestaltet sein. Bei gewölbten Einprägungen 22 entstehen gewölbte Kontaktflächen 24. Bei den ebenen Einprägungen 22 entstehen dementsprechend ebene Kontaktflächen 24.

Entsprechend den Figuren 1, 5 und 7-14 kann innerhalb des jeweiligen Gaspfads 6 eine Finnenstruktur 25 angeordnet sein, um die Wärmeübertragung von der Gasströmung 7 auf die Kanalplattenanordnungen 2 und somit auf die zu verdampfende Flüssigkeit 4 zu verbessern. Die jeweilige Finnenstruktur 25 kontaktiert dabei die jeweils dem Gaspfad zugewandte Platte 20, 21 der jeweiligen Kanalplattenanordnung 2. Zweckmäßig erfolgt diese Kontaktierung in den zuvor genannten Kontaktflächen 24. Vorteilhaft kann gemäß Figur 5 außerdem eine Fixierung der Finnenstruktur 5 an den Kanalplattenanordnungen 2 im Bereich der Kontaktflächen 24 realisiert werden. Entsprechende Befestigungsstellen sind in Figur 5 dabei mit 26 bezeichnet. Hierbei kann es sich wieder um Lötstellen oder Schweißstellen handeln.

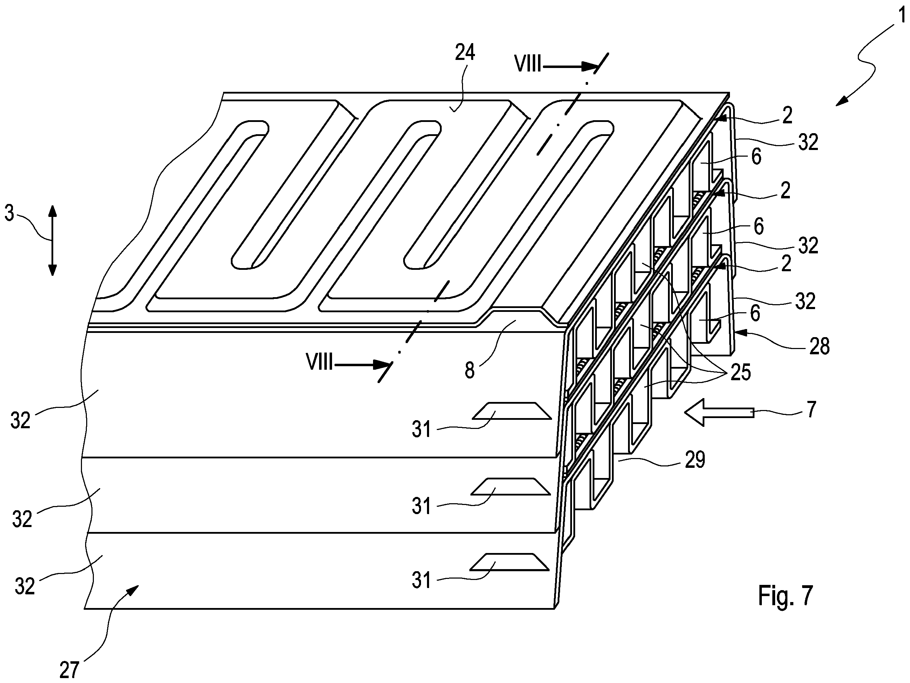

Um die Anbindung der Finnenstruktur 25 an die Kanalplattenanordnungen 2 zu verbessern, werden die ebenen Kontaktflächen 24 bevorzugt. Insbesondere können die Finnenstrukturen 25 hierzu gemäß den Figuren 7-14 quer zum Gaspfad 6 ein Rechteckprofil bzw. ein Rautenprofil aufweisen und dementsprechend ebenfalls ebene Kontaktflächen aufweisen, die flächig mit den Kontaktflächen 24 der Kanalplattenanordnungen 2 in Kontakt stehen.

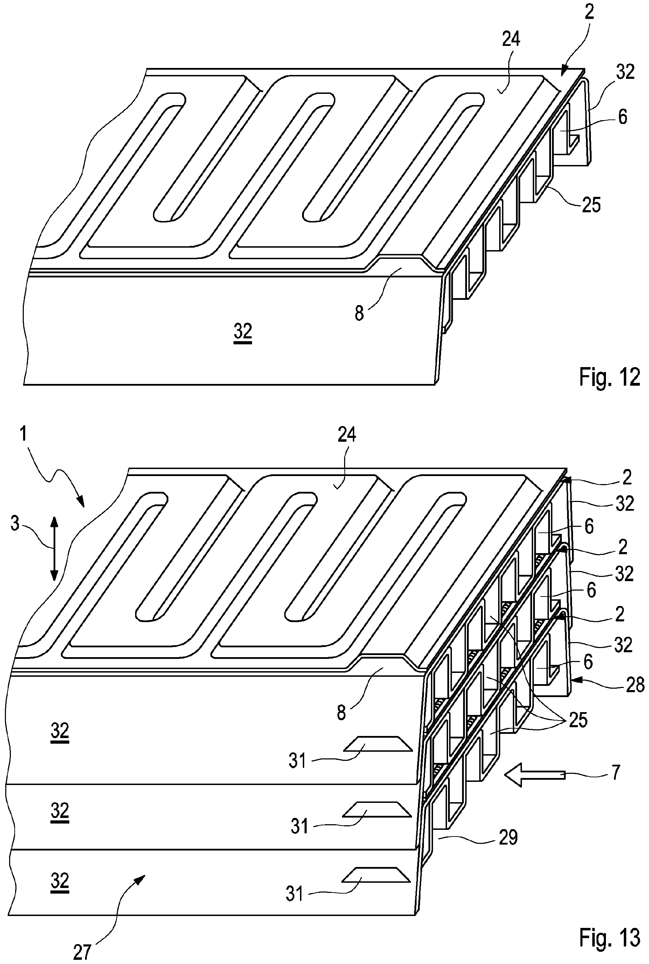

Entsprechend den Figuren 1 und 7-14 weist der Verdampfer 1 zwei seitliche Begrenzungswände 27, 28 auf, welche die Gaspfade 6 an einander gegenüberliegenden Seiten begrenzen und sich dabei von einem Gaseinlass 29 bis zu einem Gasauslass 30 erstrecken. Gemäß den Figuren 7 und 13 weist die jeweilige, dem Betrachter zugewandte Begrenzungswand 27 Einlassöffnungen 31 auf, die jeweils mit einem Flüssigkeitseinlass 8 der jeweiligen Kanalplattenanordnung 2 fluidisch verbunden sind. Die jeweils gegenüberliegende Begrenzungswand 28 enthält dementsprechend hier nicht erkennbare Auslassöffnungen, die jeweils mit einem Dampfauslass 9 der jeweiligen Kanalplattenanordnung 2 fluidisch verbunden sind.

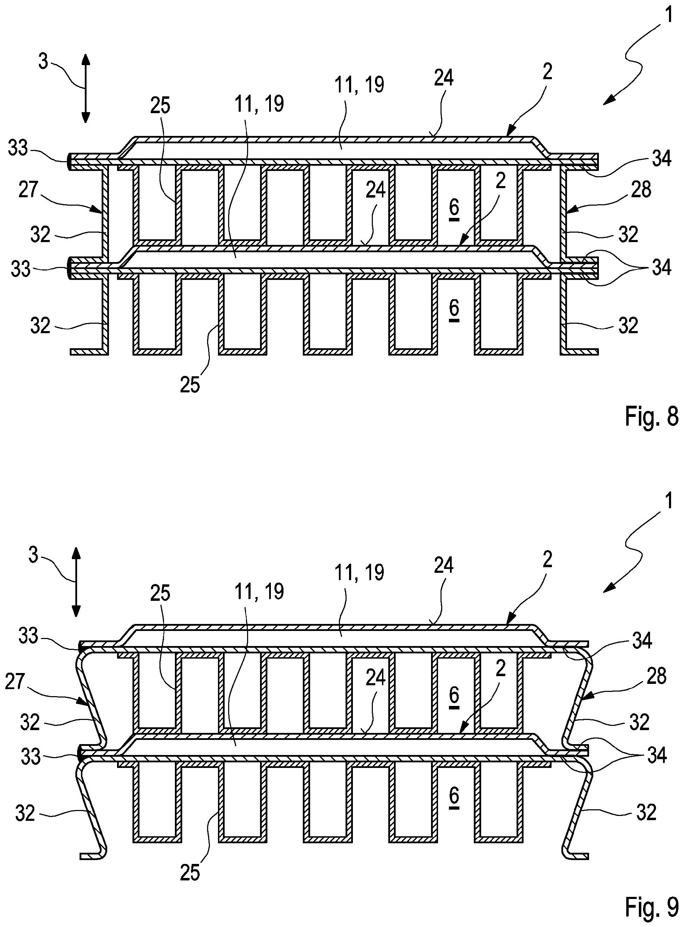

Bei den hier gezeigten Ausführungsformen der Figuren 7-14 sind die beiden Begrenzungswände 27, 28 jeweils durch mehrere Wandelemente 32 gebildet, wobei die einzelnen Wandelemente 32 jeweils nur einen der Gaspfade 6 seitlich begrenzen. Bei der in Figur 8 gezeigten Ausführungsform sind diese Wandelemente 32 als separate Bauteile bezüglich der Kanalplattenanordnungen 2 konzipiert, die an die den jeweiligen Gaspfad 6 begrenzenden Kanalplattenanordnungen 2 angebaut sind. Im Unterschied dazu sind bei den Ausführungsformen der Figuren 7 und 9-14 die Wandelemente 32 an einer der Platten 20, 21 integral ausgeformt und an die benachbarte Kanalplattenanordnung 2 angebaut. Die Montage erfolgt dabei jeweils wieder über diverse Befestigungsstellen 33 oder 34, die als Lötverbindungen oder Schweißverbindungen ausgelegt sein können. Rein exemplarisch sind mehrere Befestigungsstellen 33 als Mehrblechnähte, z. B. als 3-Blech-Nähte oder 4-Blech-Nähte, ausgelegt, während mehrere andere Befestigungsstellen 34 als flächige Lötverbindungen ausgelegt sind. Bei den Ausführungsformen der Figuren 1 und 9-14 ist das jeweilige Wandelement 32 integral an der jeweiligen Platte 21 ausgeformt, die hier eben ausgelegt ist und keine Einprägungen 22 aufweist. Grundsätzlich ist jedoch auch eine andere Ausführungsform denkbar. Beispielsweise können zwei geprägte Platten 20, 21 vorgesehen sein. Alternativ können die Wandelemente 32 integral an der mit den Einprägungen 22 versehenen Platte 20 ausgeformt sein.

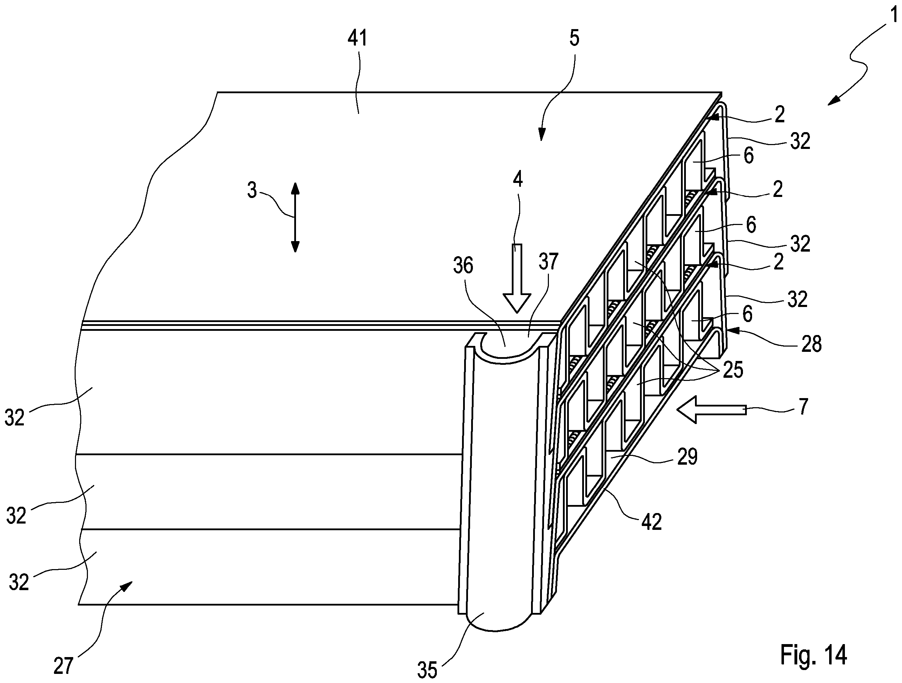

Bei der in Figur 14 gezeigten Ausführungsform ist an die dem Betrachter zugewandte Begrenzungswand 27 eine Einlassabdeckung 35 angebaut, die mehrere oder vorzugsweise alle Einlassöffnungen 31 der jeweiligen Begrenzungswand 27 abdeckt und einen Zuführkanal 36 bildet, der einen gemeinsamen Flüssiganschluss 37 mit den Flüssigkeitseinlässen 8 der verschiedenen Kanalplattenanordnungen 2 fluidisch verbindet. Analog dazu kann gemäß Fig. 1 auch die andere Begrenzungswand 28 mit einer Auslassabdeckung 38 ausgestattet sein, die mehrere oder vorzugsweise alle Auslassöffnungen der jeweiligen auslassseitigen Begrenzungswand 28 abdeckt und dabei einen Abführkanal 39 bildet, der einen gemeinsamen Dampfanschluss 40 mit den Dampfauslässen 9 der jeweiligen Kanalplattenanordnungen 2 fluidisch verbindet.

Wie sich Figur 14 ferner entnehmen lässt, umfasst der Stapel 5 bzw. der Block 5 bezüglich der Stapelrichtung 3 an zwei voneinander entfernten Enden jeweils eine Endplatte 41 bzw. 42. Die jeweilige Endplatte 41, 42 begrenzt in der Stapelrichtung 3 zusammen mit einer dazu benachbarten Kanalplattenanordnung 2 jeweils einen Gaspfad 6. In besagtem Gaspfad 6 kann außerdem eine Finnenstruktur 25 angeordnet sein. Im Beispiel der Figur 14 ist die obere Endplatte 41 außerdem integral mit zwei Wandelementen 32 ausgeformt, die gemeinsam mit den Wandelementen 32 der Kanalplattenanordnungen 2 die beiden Begrenzungswände 27, 28 bilden.

Die in Figur 14 gezeigte untere Endplatte 42 ist von den Wandelementen 32 der dazu benachbarten Kanalplattenanordnung 2 seitlich überlappt, wodurch sich ein abgedichteter Abschluss für den Stapel 5 bzw. den Block 5 einfach realisieren lässt.

Entsprechend Fig. 15 kann ein Verdampfer 1 gemäß den vorstehend beschriebenen Ausführungsformen in eine Abwärmenutzungsvorrichtung 44 integriert sein, mit deren Hilfe bei einer Brennkraftmaschine 45 im Abgas enthaltene Wärme genutzt werden kann, um so den energetischen Wirkungsgrad der Brennkraftmaschine 45 zu berbessern. Gemäß Fig. 15 umfasst eine solche Brennkraftmaschine 45 in üblicher Weise einen Motorblock46 mit mehreren Brennräumen 47 und einen Kühlkreis 48 zum Kühlen des Motorblocks 46. Die Brennkraftmaschine 45 weist außerdem eine Frischluftanlage 49 zum Zuführen von Frischluft zu den Brennräumen 47 auf. Ein entsprechender Frischluftstrom ist in Fig. 15 durch einen Pfeil angedeutet und mit 50 bezeichnet. Ferner ist eine Abgasanlage 51 vorgesehen, die Abgas von den Brennräumen 47 abführt. Ein entsprechender Abgasstrom ist in Fig. 15 durch einen Pfeil angedeutet und mit 52 bezeichnet. Im Beispiel ist die Brennkraftmaschine 45 des Weiteren mit einem Abgasturbolader 53 ausgestattet, dessen Turbine 54 in die Abgasanlage 51 eingebunden ist und dessen Verdichter 55 in die Frischluftanlage 49 eingebunden ist.

Der Kühlkreis 48 enthält einen Kühler 56, der einer durch Pfeile angedeuteten Luftströmung 57 ausgesetzt ist, die mittels eines Gebläses 58 erzeugt oder unterstützt werden kann. Eine Kühlmittelpumpe 59 treibt das flüssige Kühlmittel im Kühlkreis 48 an.

Die Abwärmenutzungsvorrichtung 44 weist einen Abwärmenutzungskreis 60 auf, in dem ein Arbeitsmedium zirkuliert. Im Abwärmenutzungskreis 60 ist der Verdampfer 1 angeordnet, derart, dass das Arbeitsmedium dem Verdampfungspfad 12 folgt. Stromab des Verdampfers 1 ist im Abwärmenutzungskreis 60 eine Expansionsmaschine 61 angeordnet, die das komprimierte, verdampfte und überhitzte Arbeitsmedium expandiert. Dabei wandelt die Expansionsmaschine Wärme bzw. Enthalpie in mechanische Arbeit um und treibt beispielsweise einen Generator 62 bzw. G an. Der Generator 62 ist hier mit einem elektrischen Energiespeicher 63 elektrisch verbunden, der beispielsweise zu einem elektrischen Bordnetz 64 der Brennkraftmaschine 45 bzw. eines Fahrzeugs gehört, in dem die Brennkraftmaschine 45 angeordnet ist. Stromab der Expansionsmaschine 61 ist im Abwärmenutzungskreis 60 ein Kondensator 65 angeordnet, in dem das expandierte Arbeitsmedium kondensiert wird. Hierzu weist der Kondensator 65 einen Wärmetauscher auf oder ist als solcher ausgestaltet. Der Kondensator 65 kann auf geeignete Weise in einen Kühlkreis eingebunden sein. Im Beispiel ist der Kondensator 65 in den Kühlkreis 48 der Brennkraftmaschine 45 eingebunden, um die Wärme aus dem Arbeitsmedium herauszuziehen. Es ist klar, dass bei einer anderen Ausführungsform auch ein bezüglich des Motor-Kühlkreises 48 separater Kühlkreis zum Abführen der Wärme aus dem Abwärmenutzungskreis 60 vorgesehen sein kann. Stromab des Kondensators 65 enthält der Abwärmenutzugskreis 60 eine Fördereinrichtung 66, insbesondere eine volumetrische Pumpe. Die Fördereinrichtung 66 dient zum Antreiben des Arbeitsmediums im Abwäremnutzungskreis 60. Dabei arbeitet die Fördereinrichtung 66 gegen einen Druck, der mithilfe der Expansionsmaschine einstellbar ist. Zum Antreiben der Fördereinrichtung 66 kann beispielsweise ein Elektromotor 67 bzw. M vorgesehen sein. Die Stromversorgung des Elektromotors 67 erfolgt zweckmäßig mithilfe des Bordnetzes 64, wozu eine entsprechende Stromversorgungsleitung 68 vorgesehen sein kann.

## Patentansprüche

1. Verdampfer zum Verdampfen einer Flüssigkeit (4), insbesondere für eine Abwärmenutzungsvorrichtung einer Brennkraftmaschine,
- mit mehreren Kanalplattenanordnungen (2), die in einer Stapelrichtung (3) gestapelt sind, wobei jeweils zwischen zwei benachbarten Kanalplattenanordnungen (2) ein Gaspfad (6) ausgebildet ist, durch den ein Gas (7) führbar ist, über das die zum Verdampfen der Flüssigkeit (4) benötigte Wärme zuführbar ist,
- wobei jede Kanalplattenanordnung (2) einen Flüssigkeitseinlass (8), einen Dampfauslass (9) und einen den Flüssigkeitseinlass (8) mit dem Dampfauslass (9) verbindenden Kanal (11) enthält, der einen mehrfach umgelenkten Verdampfungspfad (12) für die zu verdampfende Flüssigkeit (4) bildet,
- wobei die jeweilige Kanalplattenanordnung (2) zwei Platten (20, 21) aufweist, wobei der jeweilige Kanal (11) durch Einprägungen (22) gebildet ist, die entweder nur in einer der beiden Platten (20, 21) ausgebildet sind oder in beiden Platten (20, 21) spiegelsymmetrisch ausgebildet sind,
- wobei zwei seitliche Begrenzungswände (27, 28) vorgesehen sind, welche die Gaspfade (6) an einander gegenüberliegenden Seiten jeweils von einem Gaseinlass (29) bis zu einem Gasauslass (30) begrenzen,
- wobei die Begrenzungswände (27, 28) jeweils durch mehrere Wandelemente (32) gebildet sind, die jeweils nur einen der Gaspfade (6) seitlich begrenzen,
- wobei die Wandelemente (32) entweder jeweils an beide, diesen Gaspfad (6) begrenzende Kanalplattenanordnungen (2) angebaut sind oder jeweils an einer der Platten (20, 21) einer der diesen Gaspfad (6) begrenzenden Kanalplattenanordnungen (2) integral ausgeformt sind und an die dazu benachbarte Kanalplattenanordnung (2) angebaut sind,
**dadurch gekennzeichnet,**
- **dass** der jeweilige Kanal (11) zumindest in einer Verdampfungszone (14) des Verdampfungspfads (12) einen in der Strömungsrichtung der verdampfenden Flüssigkeit (4) zunehmenden durchströmbaren Querschnitt (18) aufweist,
- **dass** die eine Begrenzungswand (27) Einlassöffnungen (31) aufweist, die jeweils mit einem Flüssigkeitseinlass (8) einer der Kanalplattenanordnungen (2) fluidisch verbunden ist, und
- **dass** die eine oder die andere Begrenzungswand (28) Auslassöffnungen aufweist, die jeweils mit einem Dampfauslass (9) einer der Kanalplattenanordnungen (2) fluidisch verbunden ist.

2. Verdampfer nach Anspruch 1,
**dadurch gekennzeichnet,**
**dass** der jeweilige Kanal (11) in einer Vorwärmzone (13) des Verdampfungspfads (12) einen in der Strömungsrichtung der Flüssigkeit (4) konstant bleibenden durchströmbaren Querschnitt (18) aufweist.

3. Verdampfer nach Anspruch 1 oder 2,
**dadurch gekennzeichnet,**
**dass** der jeweilige Kanal (11) in einer Überhitzungszone (15) des Verdampfungspfads (12) einen in der Strömungsrichtung der verdampften Flüssigkeit (4) konstant bleibenden durchströmbaren Querschnitt (18) aufweist.

4. Verdampfer nach einem der Ansprüche 1 bis 3,
**dadurch gekennzeichnet,**
**dass** der jeweilige Kanal (11) in einer Vorwärmzone (13) des Verdampfungspfads (12) einen kleineren durchströmbaren Querschnitt (18) aufweist als in einer Überhitzungszone (15) des Verdampfungspfads (12).

5. Verdampfer nach einem der Ansprüche 1 bis 4,
**dadurch gekennzeichnet,**
**dass** der jeweilige Kanal (11) durch mehrere nebeneinander angeordnete Kanalabschnitte (19) gebildet ist, wobei der Verdampfungspfad (12) am Übergang zwischen zwei Kanalabschnitten (19) jeweils eine 180° Umlenkung aufweist.

6. Verdampfer nach einem der Ansprüche 1 bis 5,
**dadurch gekennzeichnet,**
**dass** die jeweilige mit Einprägungen (22) versehene Platte (20, 21) an einer dem Gaspfad (6) zugewandten Außenseite im Bereich der Einprägungen (22) konvex gewölbte oder ebene Kontaktflächen (24) aufweist.

7. Verdampfer nach Anspruch 6,
**dadurch gekennzeichnet,**
**dass** im jeweiligen Gaspfad (6) eine Finnenstruktur (25) angeordnet ist, die an den Kontaktflächen (24) angeordnet, insbesondere befestigt, ist.

8. Verdampfer nach einem der Ansprüche 1 bis 7,
**dadurch gekennzeichnet,**
**dass** die beiden Platten (20, 21) der jeweiligen Kanalplattenanordnung (2) aneinander befestigt sind.

9. Verdampfer nach Anspruch 8,
**dadurch gekennzeichnet,**
**dass** die beiden Platten (20, 21) der jeweiligen Kanalplattenanordnung (2) den jeweiligen Kanal (11) seitlich einfassend entlang des Verdampfungspfads (12) aneinander befestigt sind.

10. Verdampfer nach einem der Ansprüche 1 bis 9,
**dadurch gekennzeichnet,**
**dass** an die eine Begrenzungswand (27) eine Einlassabdeckung (35) angebaut ist, die mehrere oder alle Einlassöffnungen (31) abdeckt und einen Zuführkanal (36) bildet, der einen gemeinsamen Flüssiganschluss (37) mit den Flüssigkeitseinlässen (8) fluidisch verbindet.

11. Verdampfer nach einem der Ansprüche 1 bis 10,
**dadurch gekennzeichnet,**
**dass** an die eine oder an die andere Begrenzungswand (28) eine Auslassabdeckung (38) angebaut ist, die mehrere oder alle Auslassöffnungen abdeckt und einen Abführkanal (39) bildet, der einen gemeinsamen Dampfanschluss (40) mit den Dampfauslässen (9) fluidisch verbindet.

12. Verdampfer nach einem der Ansprüche 1 bis 11,
**dadurch gekennzeichnet,**
**dass** die gestapelten Kanalplattenanordnungen (2) einen Stapel (5) bilden, der bezüglich der Stapelrichtung (3) zwei voneinander entfernte Endplatten (41, 42) aufweist, die jeweils zusammen mit einer dazu benachbarten Kanalplattenanordnung (2) einen Gaspfad (6) ausbilden.

13. Verdampfer nach einem der Ansprüche 1 bis 12,
**dadurch gekennzeichnet,**
**dass** die jeweilige Kanalplattenanordnung (2) aus Eisen oder aus einer Eisenlegierung, insbesondere aus Stahl, vorzugsweise aus Edelstahl, oder aus einem Leichtmetall oder aus einer Leichtmetalllegierung, vorzugsweise aus einer Aluminiumlegierung, besteht.

14. Abwärmenutzungsvorrichtung für eine Brennkraftmaschine, insbesondere in einem Kraftfahrzeug,
mit einem Abwärmenutzungskreis (60), in dem ein Arbeitsmedium zirkuliert und in dem nacheinander eine Expansionsmaschine (61) zum Entspannen des Arbeitsmediums, ein Kondensator (65) zum Kondensieren des Arbeitsmediums, eine Fördereinrichtung (66) zum Antreiben des Arbeitsmediums im Abwärmenutzungskreis (60) und ein Verdampfer (1) nach einem der Ansprüche 1 bis 13 zum Verdampfen des Arbeitsmediums angeordnet sind.

15. Brennkraftmaschine, insbesondere für ein Kraftfahrzeug, mit einer Abwärmenutzungsvorrichtung (44) nach Anspruch 14 und mit einer Abgasanlage (51), die wärmeübertragend mit dem Verdampfer (1) der Abwärmenutzungsvorrichtung (44) gekoppelt ist.

## Claims

1. An evaporator for evaporating a liquid (4), in particular for a waste heat utilisation device of an internal combustion engine,
- with multiple channel plate arrangements (2), which are stacked in a stacking direction (3), wherein in each case between two adjacent channel plate arrangements (2) a gas path (6) is formed, through which a gas (7) can be conducted, via which the heat required for evaporating the liquid (4) can be supplied,
- wherein each channel plate arrangement (2) contains a liquid inlet (8), a vapour outlet (9) and a channel (11) connecting the liquid inlet (8) to the vapour outlet (9), which forms a repeatedly diverted evaporation path (12) for the liquid (4) to be evaporated,
- wherein the respective channel plate arrangement (2) comprises two plates (20, 21), wherein the respective channel (11) is formed through stampings (22), which are either formed in only one of the two plates (20, 21) or in both plates (20, 21) mirror-symmetrically,
- wherein two lateral boundary walls (27, 28) are provided, which limit the gas paths (6) on sides located opposite one another in each case from a gas inlet (29) as far as to a gas outlet (30),
- wherein the boundary walls (27, 28) are each formed through multiple wall elements (32), each of which laterally limit only one of the gas paths (6),
- wherein the wall elements (32) are attached either to both channel plate arrangements (2) limiting this gas path (6) or in each case are integrally formed on one of the plates (20, 21) of a channel plate arrangement (2) limiting this gas path (6) and are attached to the channel plate arrangement (2) which is adjacent thereto,
**characterized in**
- **that** the respective channel (11) comprises at least in one evaporation zone (14) of the evaporation path (12) a cross section (18) through which a flow can flow which increases in the flow direction of the evaporating liquid (4),
- **that** the one boundary wall (27) comprises inlet openings (31), which in each case are fluidically connected to a liquid inlet (8) of one of the channel plate arrangements (2),
- in that the one or the other boundary wall (28) comprises outlet openings, each of which is fluidically connected to a vapour outlet (9) of one of the channel plate arrangements (2).

2. The evaporator according to Claim 1, **characterized in that** the respective channel (11) in a preheating zone (13) of the evaporation path (12) has a cross section (18) through which a flow can flow which remains constant in the flow direction of the liquid (4).

3. The evaporator according to Claim 1 or 2, **characterized in that** the respective channel (11) in a superheating zone (15) of the evaporation path (12) has a cross section (18) through which a flow can flow which remains constant in the flow direction of the evaporated liquid (4).

4. The evaporator according to any one of the Claims 1 to 3, **characterized in that** the respective channel (11) in a preheating zone (13) of the evaporation path (12) has a smaller cross section (18) through which a flow can flow than in a superheating zone (15) of the evaporation path (12).

5. The evaporator according to any one of the Claims 1 to 4, **characterized in that** the respective channel (11) is formed through multiple channel sections (19) arranged next to one another, wherein the evaporation path (12) at the transition between two channel sections (19) has a 180° diversion each.

6. The evaporator according to any one of Claims 1 to 5, **characterized in that** the respective plate (20, 21) provided with stampings (22) comprises, on an outside facing the gas path (6), convexly curved or flat contact surfaces (24) in the region of the stampings (22).

7. The evaporator according to Claim 6, **characterized in that** in the respective gas path (6) a fin structure (25) is arranged, which is arranged, in particular fastened to the contact surfaces (24).

8. The evaporator according to any one of the Claims 6 to 7, **characterized in that** the two plates (20, 21) of the respective channel plate arrangement (2) are fastened to one another.

9. The evaporator according to Claim 8, **characterized in that** the two plates (20, 21) of the respective channel plate arrangement (2), laterally enclosing the respective channel (11), are fastened to one another along the evaporation path (12).

10. The evaporator according to any one of the Claims 1 to 9, **characterized in that** on a boundary wall (27) an inlet covering (35) is attached which covers multiple or all inlet openings (31) and forms a supply channel (36), which fluidically connects a common liquid connection (37) to the liquid inlets (8).

11. The evaporator according to any one of the Claims 1 to 10, **characterized in that** on the one or the other boundary wall (28) an outlet covering (38) is attached, which covers multiple or all outlet openings and forms a discharge channel (39), which fluidically connects a common vapour connection (40) to the vapour outlets (9).

12. The evaporator according to any one of the Claims 1 to 11, **characterized in that** the stacked channel plate arrangements (2) form a stack (5) which comprises two end plates (41, 42) which with respect to the stack direction (3) are distant from one another, each of which together form with a channel plate arrangement (2) adjacent thereto form a gas path (6).

13. The evaporator according to any one of the Claims 1 to 12, **characterized in that** the respective channel plate arrangement (2) consists of iron or from an iron alloy, in particular of steel, preferentially of stainless steel, or of a light metal or of a light metal alloy, preferentially of an aluminium alloy.

14. A waste heat utilisation device for an internal combustion engine, in particular in a motor vehicle, with a waste heat utilisation circuit (60), in which a working medium circulates and in which one after the other an expansion machine (61) for expanding the working medium, a condenser (65) for condensing the working medium, a conveying device (66) for driving the working medium in the waste heat utilisation circuit (60) and an evaporator (1) according to any one of the Claims 1 to 13 for evaporating the working medium are arranged.

15. An internal combustion engine, in particular for a motor vehicle, with a waste heat utilisation device (44) according to Claim 14 and with an exhaust system (51), which is coupled to the evaporator (1) of the waste heat utilisation device (44) in a heat-transferring manner.

## Revendications

1. Evaporateur pour l'évaporation d'un liquide (4), en particulier pour un dispositif d'utilisation de chaleur perdue d'un moteur à combustion interne,
- avec plusieurs agencements de plaque de canal (2) qui sont empilés dans un sens d'empilement (3), dans lequel une voie de gaz (6) est réalisée respectivement entre deux agencements de plaque de canal (2) contigus, par laquelle un gaz (7) peut être guidé, par l'intermédiaire duquel la chaleur nécessaire à l'évaporation du liquide (4) peut être guidée,
- dans lequel chaque agencement de plaque de canal (2) contient une entrée de liquide (8), une sortie de vapeur (9) et un canal (11) reliant l'entrée de liquide (8) à la sortie de vapeur (9) qui forme une voie d'évaporation (12) déviée plusieurs fois pour le liquide (4) à évaporer,
- dans lequel l'agencement de plaque de canal (2) respectif présente deux plaques (20, 21), dans lequel le canal (11) respectif est formé par des empreintes (22) qui sont réalisées seulement dans une des deux plaques (20, 21) ou sont réalisées symétriquement dans les deux plaques (20, 21),
- dans lequel deux parois de délimitation (27, 28) latérales sont prévues, lesquelles délimitent les voies de gaz (6) au niveau de côtés en regard l'un de l'autre respectivement d'une entrée de gaz (29) à une sortie de gaz (30),
- dans lequel les parois de délimitation (27, 28) sont formées respectivement par plusieurs éléments de paroi (32) qui délimitent latéralement respectivement seulement une des voies de gaz (6),
- dans lequel les éléments de paroi (32) sont montés respectivement au niveau des deux agencements de plaque de canal (2) délimitant cette voie de gaz (6) ou sont formés d'un seul tenant respectivement au niveau d'une des plaques (20, 21) d'un des agencements de plaque de canal (2) délimitant cette voie de gaz (6) et sont montés au niveau de l'agencement de plaque de canal (2) contigu à celle-ci,
**caractérisé en ce**
- **que** le canal (11) respectif présente au moins dans une zone d'évaporation (14) de la voie d'évaporation (12) une section transversale (18) pouvant être traversée croissante dans le sens d'écoulement du liquide (4) s'évaporant,
- **que** l'une paroi de délimitation (27) présente des ouvertures d'entrée (31), qui est respectivement reliée fluidiquement à une entrée de liquide (8) d'un des agencements de plaque de canal (2) et
- **que** l'une ou l'autre paroi de délimitation (28) présente des ouvertures de sortie, qui est respectivement reliée fluidiquement à une sortie de vapeur (9) d'un des agencements de plaque de canal (2).

2. Evaporateur selon la revendication 1,
**caractérisé en ce**
**que** le canal (11) respectif présente, dans une zone de préchauffage (13) de la voie d'évaporation (12), une section transversale (18) pouvant être traversée restant constante dans le sens d'écoulement du liquide (4).

3. Evaporateur selon la revendication 1 ou 2,
**caractérisé en ce**
**que** le canal (11) respectif présente, dans une zone de surchauffe (15) de la voie d'évaporation (12), une section transversale (18) pouvant être traversée restant constante dans le sens d'écoulement du liquide (4) évaporé.

4. Evaporateur selon l'une des revendications 1 à 3,
**caractérisé en ce**
**que** le canal (11) respectif présente, dans une zone de préchauffage (13) de la voie d'évaporation (12), une section transversale (18) pouvant être traversée plus petite que dans une zone de surchauffe (15) de la voie d'évaporation (12).

5. Evaporateur selon l'une des revendications 1 à 4,
**caractérisé en ce**
**que** le canal (11) respectif est formé par plusieurs sections de canal (19) agencées l'une à côté de l'autre, dans lequel la voie d'évaporation (12) présente, au niveau de la transition entre deux sections de canal (19), respectivement une déviation de 180°.

6. Evaporateur selon l'une des revendications 1 à 5,
**caractérisé en ce**
**que** la plaque (20, 21) respective pourvue d'empreintes (22) présente des surfaces de contact (24) planes ou courbées de manière convexe au niveau d'un côté extérieur tourné vers la voie de gaz (6) dans la zone des empreintes (22).

7. Evaporateur selon la revendication 6,
**caractérisé en ce**
**qu'**une structure d'ailette (25) est agencée dans la voie de gaz respective (6), laquelle est agencée, en particulier fixée, au niveau des surfaces de contact (24).

8. Evaporateur selon l'une des revendications 1 à 7,
**caractérisé en ce**
**que** les deux plaques (20, 21) de l'agencement de plaque de canal (2) respectif sont fixées l'une à l'autre.

9. Evaporateur selon la revendication 8,
**caractérisé en ce**
**que** les deux plaques (20, 21) de l'agencement de plaque de canal (2) respectif sont fixées en encadrant latéralement le canal (11) respectif le long de la voie d'évaporation (12) l'une à l'autre.

10. Evaporateur selon l'une des revendications 1 à 9,
**caractérisé en ce**
**qu'**au niveau de l'une paroi de délimitation (27), un recouvrement d'entrée (35) est monté, qui recouvre plusieurs ou toutes les ouvertures d'entrée (31) et forme un canal d'amenée (36) qui relie fluidiquement un raccordement de liquide commun (37) aux entrées de liquide (8).

11. Evaporateur selon l'une des revendications 1 à 10,
**caractérisé en ce**
**qu'**au niveau de l'une ou l'autre paroi de délimitation (28), un recouvrement de sortie (38) est monté, qui recouvre plusieurs ou toutes les ouvertures de sortie et forme un canal d'évacuation (39) qui relie fluidiquement un raccordement de vapeur commun (40) aux sorties de vapeur (9).

12. Evaporateur selon l'une des revendications 1 à 11,
**caractérisé en ce**
**que** les agencements de plaque de canal (2) empilés forment un empilement (5) qui présente par rapport au sens d'empilement (3) deux plaques d'extrémité (41, 42) éloignées l'une de l'autre qui réalisent respectivement conjointement avec un agencement de plaque de canal (2) contigu à celles-ci une voie de gaz (6).

13. Evaporateur selon l'une des revendications 1 à 12,
**caractérisé en ce**
**que** l'agencement de plaque de canal (2) respectif est constitué de fer ou d'un alliage de fer, en particulier d'acier, de préférence d'acier spécial, ou d'un métal léger ou d'un alliage de métal léger, de préférence d'un alliage d'aluminium.

14. Dispositif d'utilisation de chaleur perdue pour un moteur à combustion interne, en particulier dans un véhicule automobile,
avec un circuit d'utilisation de chaleur perdue (60), dans lequel un fluide de travail circule et dans lequel une machine d'expansion (61) pour la détente du fluide de travail, un condensateur (65) pour la condensation du fluide de travail, un dispositif de transport (66) pour l'entraînement du fluide de travail dans un circuit d'utilisation de chaleur perdue (60) et un évaporateur (1) selon l'une des revendications 1 à 13 pour l'évaporation du fluide de travail sont agencés les uns après les autres.

15. Moteur à combustion interne, en particulier pour un véhicule automobile, avec un dispositif d'utilisation de chaleur perdue (44) selon la revendication 14 et avec une installation de gaz d'échappement (51) qui est couplée par transmission de chaleur avec l'évaporateur (1) du dispositif d'utilisation de chaleur perdue (44).
